# EUROPÄISCHE PATENTSCHRIFT

(11) **EP 2 580 028 B1**
(45) Veröffentlichungstag und Bekanntmachung des Hinweises auf die Patenterteilung: **07.09.2016**
(21) Anmeldenummer: 11723958.2
(22) Anmeldetag: 06.06.2011
(51) Int. Cl.: B25J 15/02, B65G 47/90, B65B 35/16

(54) **VORRICHTUNG ZUM GREIFEN UND ANHEBEN VON GEGENSTÄNDEN**
DEVICE FOR GRIPPING AND LIFTING OBJECTS.
APPAREIL POUR SAISIR ET SOULEVER DES OBJETS.

(30) Priorität: 11.06.2010 EP 10165608
(43) Veröffentlichungstag der Anmeldung: 17.04.2013
(73) Patentinhaber: Riedmayer, Sigurd A., 88045 Friedrichshafen (DE)
(72) Erfinder: Riedmayer, Sigurd A., 88045 Friedrichshafen (DE)
(74) Vertreter: Engelhardt & Engelhardt
(86) Internationale Anmeldenummer: PCT/EP2011/059251
(87) Internationale Veröffentlichungsnummer: WO 2011/154337

(56) Entgegenhaltungen:
- WO-A1-2008/084134
- WO-A1-2008/145022
- US-A1- 2009 133 524

## Beschreibung

Die Erfindung bezieht sich auf eine Vorrichtung zum Greifen und Anheben von Gegenständen oder zum Spannen von Drähten, bestehend aus mindestens zwei an einem Traggestell abgestützten Greifarmen oder Spannrohre, zwischen denen der aufzunehmende Gegenstand oder an denen ein Draht einspannbar ist, und aus einer mit dem jeweiligen Greifarm oder den Spannrohren über Zwischenglieder trieblich verbundenen Antriebseinrichtung.

Mit Hilfe einer solchen Vorrichtung, die als Greifvorrichtung zum lösbaren Greifen und Halten einer Last durch die DE GM 84 30 418 U1 beschrieben ist, sollen Gegenstände transportierbar sein. Die bekannt gewordene Vorrichtung besteht aus zwei im Ausgangszustand parallel und beabstandet zueinander verlaufenden Greifarmen, die über ein Antriebsgestänge mit einer Antriebseinrichtung verbunden sind. Durch die Antriebseinrichtung ist das Antriebsgestänge auseinander gedrückt, so dass die Greifarme um den Angriffspunkt des Antriebsgestänges scherenförmig auf und zu bewegt werden können, um die Last mittels Reibkraft einzuspannen und aufzunehmen.

Solche Vorrichtungen haben sich in einer Vielzahl von Anwendungen in der Praxis zwar bewährt, jedoch weisen diese erhebliche Nachteile auf. Die bekannten Vorrichtungen sind nämlich mittels einer Antriebseinrichtung angetrieben, die eine vorgegebene Krafteinleitung aufweist. Folglich sind die auf die Gegenstände einwirkenden normalen Spannkräfte, die von den Greifarmen aufgewendet sind, konstant und können nicht wesentlich variiert werden. Sollten beispielsweise äußerst empfindliche, leicht zerbrechliche Gegenstände mittels der Greif- und Handhabungsvorrichtung transportiert werden, führt dies oftmals zu Beschädigungen oder sogar zu Zerstörungen der Gegenstände, wenn die Spannkraft einen Wert übersteigt, der größer bemessen ist als die Kraft, die von dem Gegenstand abgestützt werden können.

Weisen die Gegenstände eine hohe Eigengewichtskraft auf, reichen die Spannkräfte oftmals nicht aus, diese Gegenstände zuverlässig zwischen den Greifarmen zu halten; eine Krafterhöhung ist aufgrund der verwendeten Antriebseinrichtung und der vorhandenen Geometrie nicht möglich.

Darüber hinaus hat sich als nachteilig herausgestellt, dass bei unterschiedlich groß bemessenen Gegenständen die Greifeinrichtung, insbesondere die Greifarme, auszutauschen sind, denn die Greifarme der bekannt gewordenen Greif- und Handhabungsvorrichtungen können in ihrer Weite lediglich unwesentlich reguliert werden.

Ferner ist bei den bekannten Greifvorrichtungen als nachteilig anzusehen, dass deren Krafteinleitung auf die Greifarme unmittelbar in eine Spannbewegung umgesetzt wird. Technisch bedeutet dies, dass mit Hilfe eines Antriebes die Greifarme unmittelbar in Richtung auf den einzuspannenden Gegenstand zugestellt sind und somit ausschließlich mit Hilfe der Kraft, die von der Antriebseinrichtung aufgebracht ist, gehalten werden. Dies führt dazu, dass dann die bekannten Greifvorrichtungen nicht als Spannschlösser, beispielsweise um einen Draht oder ein Seil zu spannen, einsetzbar sind, da die Krafteinleitung ein Zusammenziehen der gegenüberliegenden Greifarme oder Spannrohre nicht bewirkt und folglich durch die Kraftbetätigung kein Zusammenziehen des Spannschlosses erfolgt.

Es ist daher Aufgabe der Erfindung eine Vorrichtung zum Greifen und Anheben von Gegenständen der eingangs genannten Gattung derart weiterzubilden, dass die von der Antriebseinrichtung aufgewendete Kraft in einem einstellbaren Übersetzungsverhältnis an die Greifarme gelangt und dass die Greifarme möglichst schnell geschlossen oder geöffnet werden können. Des Weiteren soll die Weitenregulierung, also der Abstand zwischen den Greifarmen, möglichst ohne zeitliche Verzögerung und ohne Austausch der Greifarme durchführbar sein.

Mit Hilfe der erfindungsgemäßen Vorrichtung soll ferner eine Kraftumleitung erfolgen, durch die nicht nur die Greifarme der Vorrichtung zusammengezogen sind, sondern mit denen die erfindungsgemäße Vorrichtung auch als Spannschloss, beispielsweise um Wanten an einem Boot oder Zäune aus Draht zu spannen, verwendbar ist.

Diese Aufgabe ist durch die Merkmalskombination der jeweiligen Ansprüche 1 und 2 gelöst.

Dadurch, dass zur Weiteneinstellung der Greifarme dem Führungsschlitten jeweils eine Gewindespindel zugeordnet ist, die zueinander gegenläufige Gewinderichtungen aufweisen, dass der jeweilige Führungsschlitten mit der jeweiligen Gewindespindel formschlüssig verbunden ist, und dass an dem Außengewinde der Gewindespindel ein Backen aufgeschraubt ist, der mit dem jeweiligen Greifarm verbunden ist und der drehfest und axial verschiebbar an dem Führungsgestänge gehalten ist, ist erreicht, dass der Abstand zwischen den Greifarmen über die Rotation der jeweiligen Gewindespindel ohne zeitliche Verzögerung und ohne Austausch der Greifarme variabel einstellbar ist.

Da zwischen dem Führungsschlitten und der Antriebseinrichtung ein Kniehebel angeordnet ist, ist die von der Antriebseinrichtung aufgebrachte konstante Kraft in einem vorgegebenen Kraftübersetzungsverhältnis auf den Führungsschlitten und damit auf die Greifarme variabel übertragbar.

Der Kniehebel wird mittels der Antriebseinheit mit einer konstanten Kraft beaufschlagt, so dass der Gelenkpunkt des Kniehebels, der mit der Antriebseinheit verbunden ist, einen Hubweg zurücklegt und dabei die Stangen des Kniehebels aufspreizt, durch die eine Spannkraft auf die Greifarme übertragen ist. Der Kniehebel weist dabei eine Kraftübersetzung auf, die ausgehend von dem Ausgangspunkt des Kniehebels, also im nahezu geschlossenen Zustand bis zu einer fast 180° aufgespreizten Position einen zunächst annäherend linear ansteigenden und ab einem Spreizwinkel von etwa 120° einen angenäherten exponential ansteigenden Kraftverlauf besitzt. Dieser unterschiedliche Kraftverlauf wird von den Greifarmen auf den Gegenstand übertragen, so dass die Spannkraft der Greifarme von dem Spreizwinkel des Kniehebels abhängt.

Wenn beispielsweise eine äußerst schwere Last zu greifen ist, dann sollen die Greifarme derart in einem Abstand zum Objekt positioniert sein, dass der Kniehebel möglichst weit aufgespreizt ist, und zwar in dem Moment in dem die Greifarme am Objekt zur Anlage kommen. Die maximale Kraft des Kniehebels kommt hier bei einer Annäherung an 180° Spreizwinkel zu Stande.

Wenn dagegen der aufzunehmende Gegenstand eine geringe Gewichtskraft aufweist, sind die Greifarme recht nahe am Objekt zu positionieren. Somit tritt über die Greifarme beim Aufspreizen des Kniehebels eine entsprechend geringe Spannkraft auf, da beispielsweise bei einem Spreizwinkel von 70° die Greifarme am Objekt bereits anliegen und folglich ein leichter linearer Spannkraftanstieg auf das Objekt einwirkt. Mit der Abnahme des Spreizwinkels verringert sich die Spannkraft.

Wenn ein zerbrechlicher oder elastischer Gegenstand aufzunehmen ist, muss der Hubweg des Kniehebels begrenzt sein. Die Begrenzung des Hubweges kann beispielsweise mittels eines Gewindestiftes erfolgen und variabel eingestellt werden.

Die vom Kniehebel erzeugte unterschiedliche Spannkraft und der Anschlag führen dazu, dass die von den Greifarmen aufgewendete Spannkraft, die auf den aufzunehmenden Gegenstand einwirkt, exakt an die Gegebenheiten des Gegenstandes angepasst werden kann. Wenn demnach der Gegenstand äußerst leicht und/oder zerbrechlich ist, wird die Kraft der Antriebseinrichtung durch den Stellungswinkel des Kniehebel derart reduziert, dass die auf den Gegenstand einwirkende Spannkraft diesen nicht zerstört und gleichwohl zuverlässig fixiert.

Eine Veränderung der Hebelverhältnisse des Kniehebels kann insbesondere dadurch erreicht sein, dass die Kraftangriffspunkte zwischen der Antriebseinrichtung der jeweiligen Greifarme an dem Führungsschlitten verschiebbar sind, so dass diese variabel bezogen auf den gewünschten Hubweg der Greifarme einstellbar sind.

Ein weiterer Vorteil des Kniehebels ist darin zu sehen, dass der Kniehebel auch die Geschwindigkeiten der Greifarme beeinflusst, und zwar derart, dass die Greifarme bei einer weit aufgespreizten Stellung eine geringere Bewegungsgeschwindigkeit und bei einer nahezu geschlossenen Stellung des Kniehebels eine wesentlich höhere Zustellgeschwindigkeit besitzen. Dies bedeutet, dass beispielsweise bei Greifarmen, die den Gegenstand formschlüssig, beispielsweise in Form eines gebogenen Greifarmes einspannen und im nahezu vollständig aufgespreizten Zustand des Kniehebels äußerst rasch geöffnet werden können, in dem der Kniehebel in die nahezu geschlossene Stellung überführt ist, die Greifarme schnell bewegen, die demnach seitlich sehr schnell von dem Gegenstand weggeführt sind, so dass dieser, ohne zu verkanten oder an den Greifarmen hängen zu bleiben, aus diesen gelöst ist. Der Kniehebel besitzt folglich eine äußerst günstige Kinematik, die ein schnelles Öffnen und Schließen der Greiferarme ermöglicht.

Durch die Kniehebel Kinematik und die zusätzlich vorhandene Weiteneinstellung der Greiferarme mittels der Gewindespindeln kann die auf die Gegenstände einwirkende Spannkraft exakt eingestellt werden, so dass die Gegenstände, auch wenn diese elastisch verformbar sind, definiert eingespannt werden können bzw. wenn die Gegenstände eine sehr hohe Eigengewichtskraft aufweisen, eine zuverlässige und ausreichende Spannkraft auf die Gegenstände einwirkt.

Da mit Hilfe des Kniehebels und der entsprechenden Umlenkung bzw. Anlenkung der einzelnen Kniehebelarme an den Greifarmen oder Spannrohren beim Auseinanderdrücken des Kniehebels, also wenn sich die freien Enden der beiden Kniehebelarme auseinanderbewegen, eine Kraftumleitung derart erfolgt, dass die Greifarme oder Spannrohre aufeinander zugestellt sind, um die Gegenstände einzuspannen, bzw. den Abstand zwischen den Spannrohren zu reduzieren, kann auf einfache Art und Weise eine solche Greif- und Anhebe-Vorrichtung auch als Spannschloss verwendet werden, wenn nämlich anstelle der Greifarme die Spannrohre, an denen Seil- oder Drahtschlingen einsteckbar sind, angebracht werden. Durch das Herunterdrücken des Kniehebels bewegen sich nämlich die freien Enden der Spannrohre aufeinander zu, so dass die daran befestigten Drahtenden aufeinander zu bewegt und damit gespannt sind.

In der Zeichnung sind vier erfindungsgemäße Ausführungsbeispiele einer Vorrichtung zum Greifen und Anheben von Gegenständen sowie zum Spannen eines Drahtes dargestellt, die nachfolgend näher erläutert sind. Im Einzelnen zeigt:
- Figur 1 a: ein erstes Ausführungsbeispiel einer Vorrichtung zum Greifen und Anheben von Gegenständen mit zwei an einem Traggestell abgestützten, zueinander beabstandeten die Gegenstände aufnehmenden Greifarme und mit einer Antriebseinrichtung, durch die über ein Kniehebel jeweils ein Führungsschlitten, der trieblich mit den jeweiligen Greifarmen verbunden ist, linear verschiebbar ist, im Schnitt und im Ausgangszustand,
- Figur 1b: die Vorrichtung gemäß Figur 1 a im Betriebszustand,
- Figur 2a: die Vorrichtung gemäß Figur 1a, teilweise geschnitten,
- Figur 2b: die Vorrichtung gemäß Figur 1b, teilweise geschnitten,
- Figur 3a: ein zweites Ausführungsbeispiel einer Vorrichtung zum Greifen und Anheben von Gegenständen mit zwei an einem Traggestell abgestützten, zueinander beabstandeten die Gegenstände aufnehmenden Greifarme und mit einer Antriebseinrichtung, durch die über ein Kniehebel jeweils ein Führungsschlitten, der trieblich mit den jeweiligen Greifarmen verbunden ist, linear verschiebbar ist sowie mit einer Gewindespindel zur Weitenregulierung des Abstandes der Greifarme, im Ausgangszustand,
- Figur 3b: die Vorrichtung gemäß Figur 3a, teilweise geschnitten ,
- Figur 4: die Vorrichtung gemäß Figur 3a, in perspektivischer Ansicht,
- Figur 5a: ein drittes Ausführungsbeispiel einer Vorrichtung zum Greifen und Anheben von Gegenständen, mit zwei in einem Traggestell abgestützten, zueinander beabstandeten und die Gegenstände aufnehmenden Greifarmen und, mit einer Antriebseinrichtung, durch die über einen Kniehebel zwei Rohrstücke, die telekopartig ineinander gelagert sind und die trieblich mit der Antriebseinheit über den Kniehebel und den jeweiligen Greifarmen verbunden sind, linear verschiebbar gehalten sind, in Draufsicht,
- Figur 5b: die Vorrichtung gemäß Figur 5a, entlang der Schnittlinie 5b-5b,
- Figur 6a: die Vorrichtung gemäß Figur 5a, entlang der Schnittlinie 6a-6a,
- Figur 6b: die Vorrichtung gemäß Figur 5a, entlang der Schnittlinie 6b-6b,
- Figur 6c: die Vorrichtung gemäß Figur 6a, entlang der Schnittlinie 6c-6c,
- Figur 7a: ein viertes Ausführungsbeispiel einer Vorrichtung zum Spannen eines Drahtes, mit zwei in einem Traggestell zueinander abgestützten Rohrstücke zur Aufnahme von Drahtenden und mit einer Antriebseinrichtung, durch die über einen Kniehebel zwei Rohrstücke, die teleskopartig ineinander gelagert sind und die trieblich mit der Antriebseinheit über den Kniehebel und den jeweiligen Rohrstücken verbunden sind, linear verschiebbar gehalten sind, im Ausgangszustand und in perspektivischer Ansicht und
- Figur 7b: die Vorrichtung gemäß Figur 7a, im gespannten Zustand.

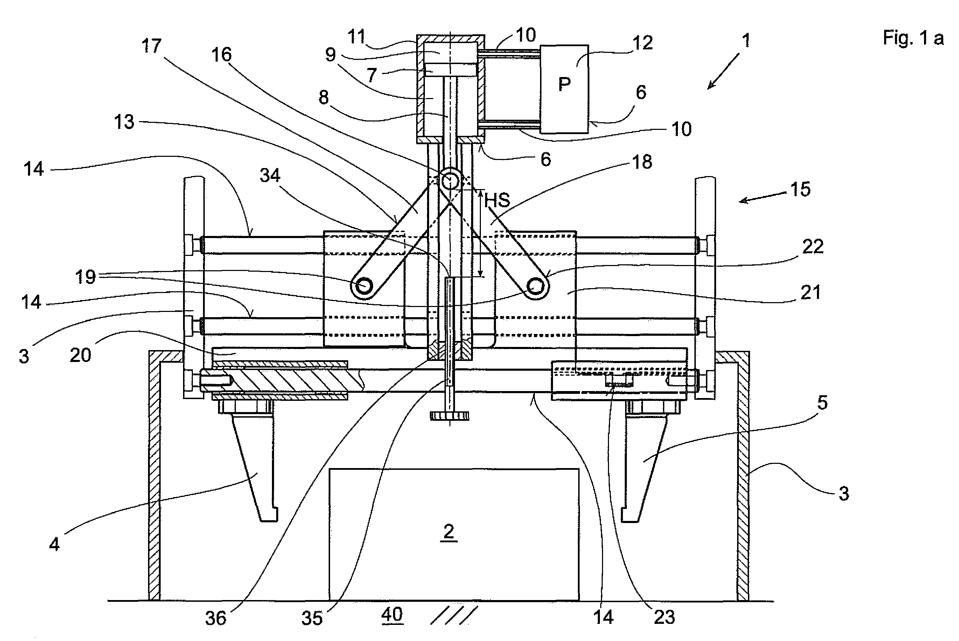

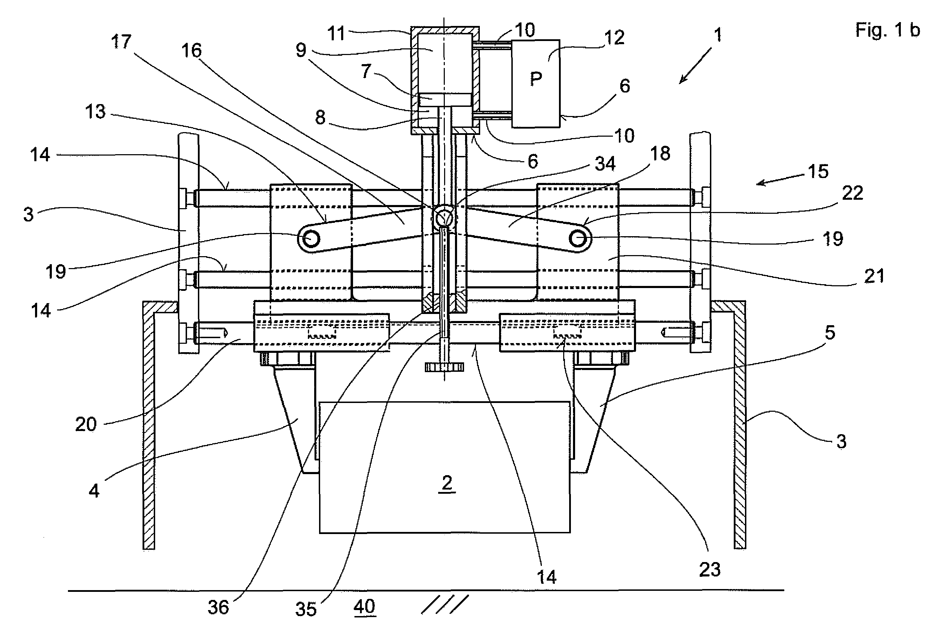

In Figur 1 ist eine Vorrichtung 1 zum Greifen und Anheben von Gegenständen 2 gezeigt, die über ein Traggestell 3 an einem Boden 40 abgestützt ist. Die Gegenstände 2 sind von dem Boden 40 anzuheben und an eine andere Position zu transportieren. Dies soll mittels der Vorrichtung 1 bewerkstelligt sein. Die Größe und Eigengewichtskraft der Gegenstände 2 können erheblich variieren.

Es ist auch denkbar das Traggestell 3 der Vorrichtung 1 an einem Maschinenrahmen, an einem dreidimensional verfahrbaren Roboter, an einer Decke oder dgl. zu befestigen.

An dem Traggestell 3 sind zwei zueinander beabstandete Greifarme 4, 5 vorgesehen, zwischen denen der aufzunehmende Gegenstand 2 mittels einer Spannkraft im Betriebszustand gehalten ist. Die Greifarme 4, 5 sind dabei an einem Führungsgestänge 14 linear verschiebbar gehalten.

Die Bewegungen der beiden Greifarme 4, 5 aufeinander zu zur Einspannung und Aufnahme des Gegenstandes 2 bzw. vice versa, erfolgt mittels einer Antriebseinrichtung 6, durch die über Zwischenglieder 13 die Greifarme 4 und 5 - wie nachfolgend näher erläutert - linear bewegbar sind.

Eine mögliche Alternative der Antriebseinrichtung 6 umfasst eine Pumpe P, durch die Hydraulikflüssigkeit über Zuleitungen 10 in zwei Druckräume 9 wechselweise gepresst sind. Die Druckräume 9 sind von einem Gehäuse 11 umgeben und von einem Kolben 7 voneinander getrennt; die beiden Leitungen 10 münden in die Druckräume 9. Die Hydraulikflüssigkeit bewegt den Kolben 7 in Abhängigkeit von der jeweiligen Befüllung des Druckraumes 9. Bereits die vom Kolben 7 eingenommene Druckfläche reduziert oder erhöht die von der Pumpe P zur Verfügung gestellte Kraft.

Weitere Alternativen sind pneumatische, elektrische oder benzinbetriebene Antriebseinrichtungen oder die manuelle Betätigung.

An dem Kolben 7 ist eine Kolbenstange 8 angebracht, die aus dem Gehäuse 11 ragt. Ist somit der obere Druckraum 9 im gezeigten Ausgangszustand der Figur 1a mit Hydraulikflüssigkeit durch die Pumpe P befüllt, bewegt sich der Kolben 7 nach unten, so dass die Kolbenstange 8, die an einem Angriffspunkt 16 an einem Kniehebel 15 verbunden ist, nach unten geschoben ist. Der Angriffspunkt 16 ist in dem Traggestell 3 in einer Linearführung axial verschiebbar gehalten, so dass dieser durch die Bewegung der Kolbenstange 8 in Richtung auf die Greifarme 4, 5 zugestellt ist.

Ausgehend von dem nahezu geschlossenen Zustand des Kniehebels 15 entsteht beim Aufspreizen des Kniehebels 15 zunächst eine linear angenähert ansteigende Spannkraft, die auf die Greifarme 4, 5 übertragen ist. Sobald der Spreizwinkel etwa 120° beträgt, steigt die Spannkraft des Kniehebels 15 angenähert exponential an und die Zustellgeschwindigkeit der Greifarme 4,5 veringert sich. Mittels eines in der Figur 1 a abgebildeten Anschlages 34 kann der Hubweg des Kniehebels 15, insbesondere des Angriffspunktes 16 begrenzt sein. Der Anschlag 34 ist mittels eines Gewindestiftes 35 gebildet, der in eine Gewindebohrung 36, die in dem Traggestell 3 eingearbeitet ist, variabel eindrehbar ist, um insbesonders zerbrechliche Gegenstücke 2 vor Beschädigungen zu schützen

Da die beiden den Kniehebel 15 bildenden Stangen 17, 18 scherenartig auseinander gedrückt sind, sind die Bewegungen der Stangen 17, 18 über einen Angriffspunkt 19 jeweils mit einem Führungsschlitten 21 trieblich gekoppelt. Der Führungsschlitten 21 ist in seinem Querschnitt L-förmig ausgestaltet. Das erste freie Ende 22 des Führungsschlittens 21 ist dabei der jeweiligen Stange 17 oder 18 des Kniehebels 15 zugeordnet; die Stange 17 oder 18 ist gelenkig mit dem Führungsschlitten 21 verbunden.

Das Zwischenglied 13 ist demnach von dem Kolben 7, der Kolbenstange 8, dem Kniehebel 15 und dem Führungsschlitten 21 in diesem konkreten Ausführungsbeispiel gebildet.

Der Führungsschlitten 21 weist insgesamt vier Durchgangsöffnungen auf, die in ihrem Querschnitt rund ausgestaltet sind. In die jeweilige Durchgangsöffnung ist eine Stange 20 eingesetzt, durch die das Führungsgestänge 14 gebildet ist. Folglich ist jeder der beiden Führungsschlitten 21, vorzugsweise in den Eckbereichen, an den vier Stangen 20 des Führungsgestänges 14 axial verschiebbar abgestützt. Durch die Aufspreizbewegung des Kniehebels 15 wird somit jeder der beiden Führungsschlitten 21 nach außen gedrückt.

Um nunmehr eine Zustellbewegung der beiden Greifarme 4 und 5 zur Aufnahme des Gegenstandes 2 zu erreichen, ist der L-förmig ausgestaltete Führungsschlitten 21 mit dem Angriffspunkt 19 formschlüssig mit einem der Greifarme 4 und 5 verbunden. Der Angriffspunkt 19 liegt folglich auf der gegenüberliegenden Seite des jeweiligen Angriffspunktes 16. Somit wird durch das Aufspreizen des Kniehebels 15 und die dadurch erfolgte Linearverschiebung des Führungsschlittens 21 nach außen eine Zustellung der Greifarme 4 und 5 aufeinander zu bewerkstelligt.

Der Kniehebel 15 dient nicht nur als Zwischenglied 13 zur Kraftübertragung, die von der Antriebseinrichtung 6 zur Verfügung gestellt ist, sondern auch dazu, die konstante Antriebskraft der Antriebseinrichtung 6 und des Kolbens 7 zu übersetzen. Das Übersetzungsverhältnis des Kniehebels 15 hängt im Wesentlichen von dessen Spreizstellung ab. Die Angriffspunkte 16 und 19 zwischen der Kolbenstange 8 und dem jeweiligen Führungsschlitten 21 können zudem variabel einstellbar sein, so dass die Hubwege des Kniehebels 15 an die Gegebenheiten der aufzunehmenden Gegenstände 2 ohne weitere Austausch- oder Umrüstungsmaßnahmen anpassbar sind.

In Figur 1b ist gezeigt, dass die Greifarme 4 und 5 den Gegenstand 2 einspannen und diesen von dem Boden 40 abheben. Somit kann der Gegenstand 2, beispielsweise entlang einer Schienenführung oder dgl., transportiert werden. Der Kniehebel 15 ist vollständig auseinander gespreizt.

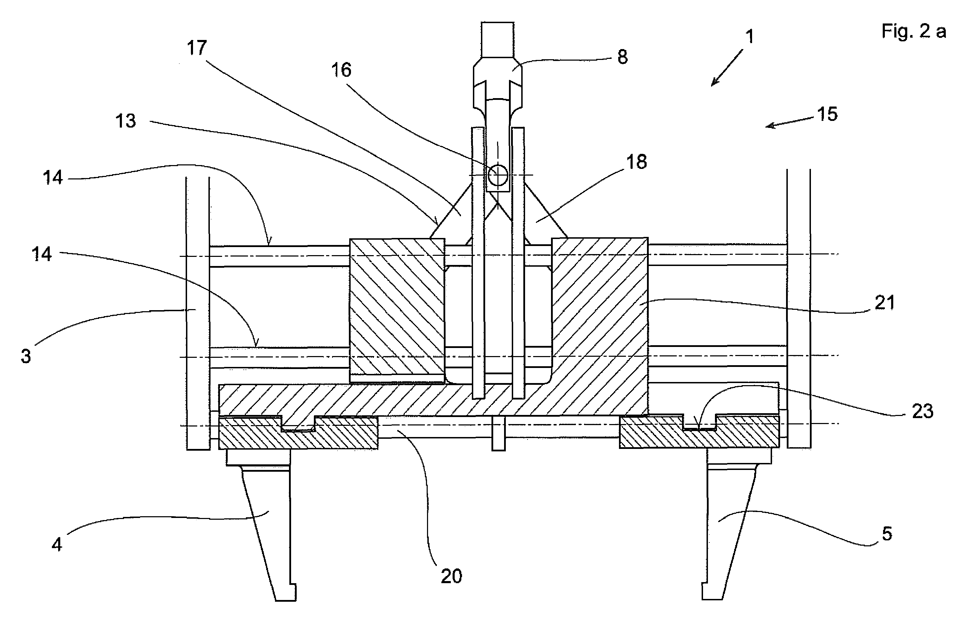

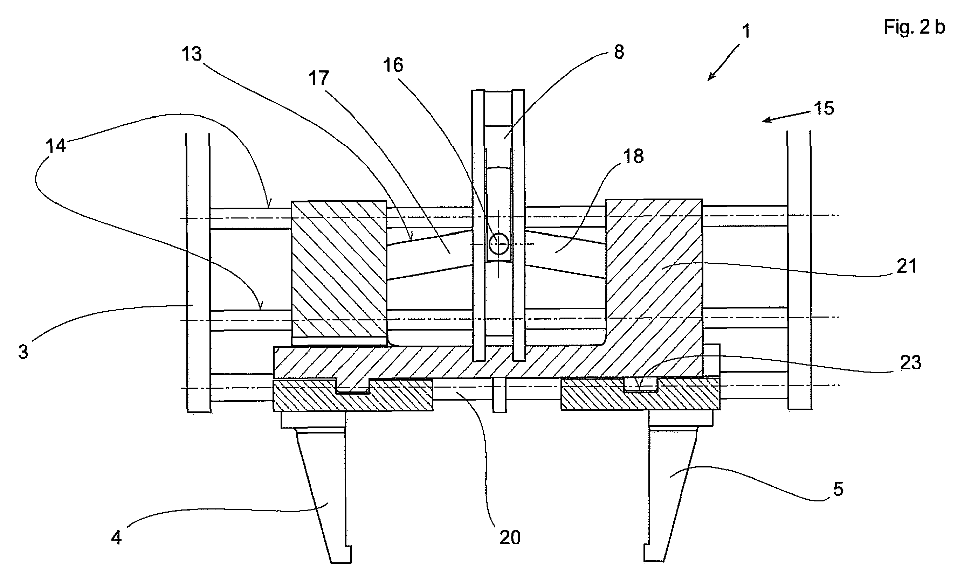

Insbesondere den Figuren 2a und 2b kann die formschlüssige Wirkverbindung zwischen dem Führungsschlitten 21 und dem jeweiligen Greifarm 4 oder 5 entnommen sein. In den Greifarm 4 oder 5 ist nämlich eine Nut eingearbeitet, in die ein keilförmiger Ansatz, der an dem Führungsschlitten 21 angeformt ist, eingesetzt ist. Auch die L-förmige Querschnittsform des Führungsschlittens 21 sind den beiden Figuren 2a und 2b zu entnehmen.

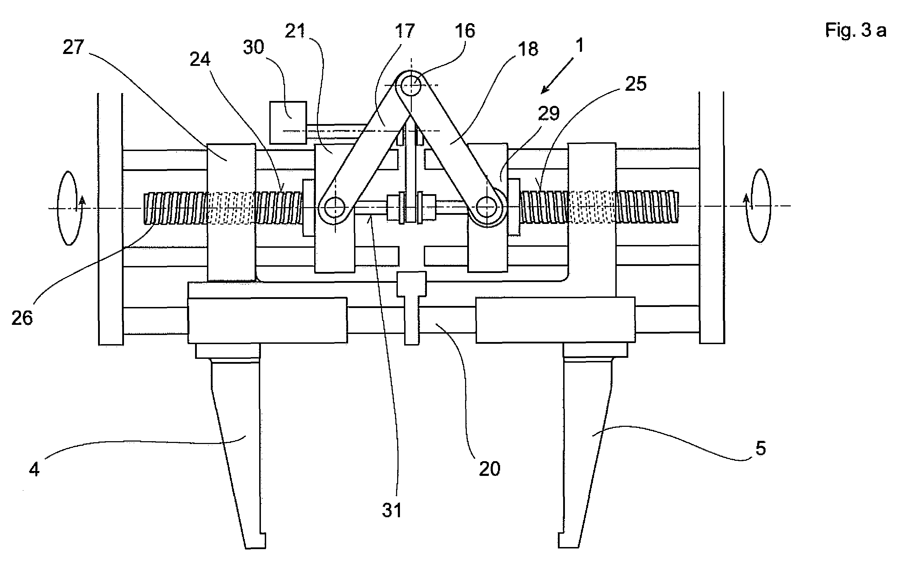

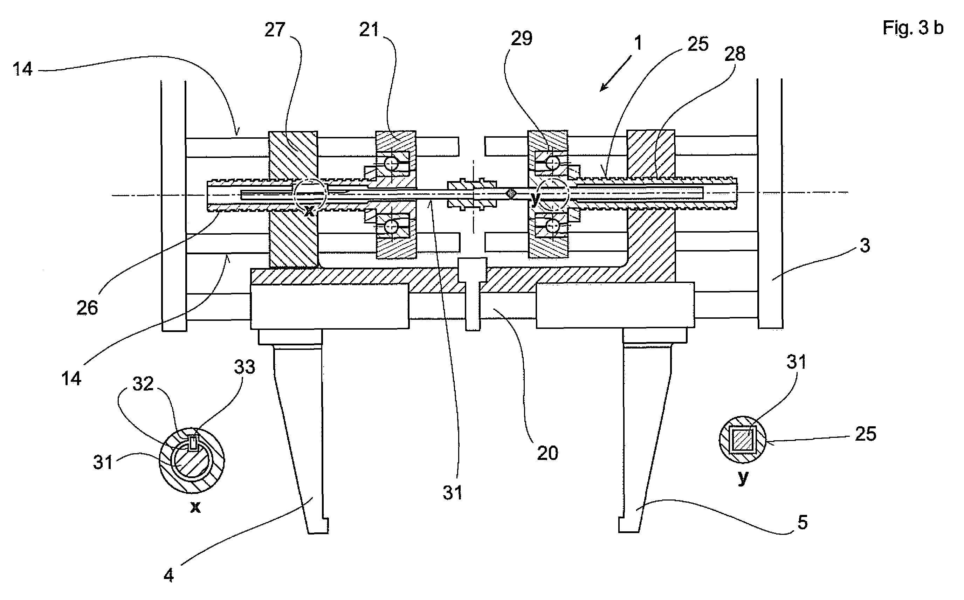

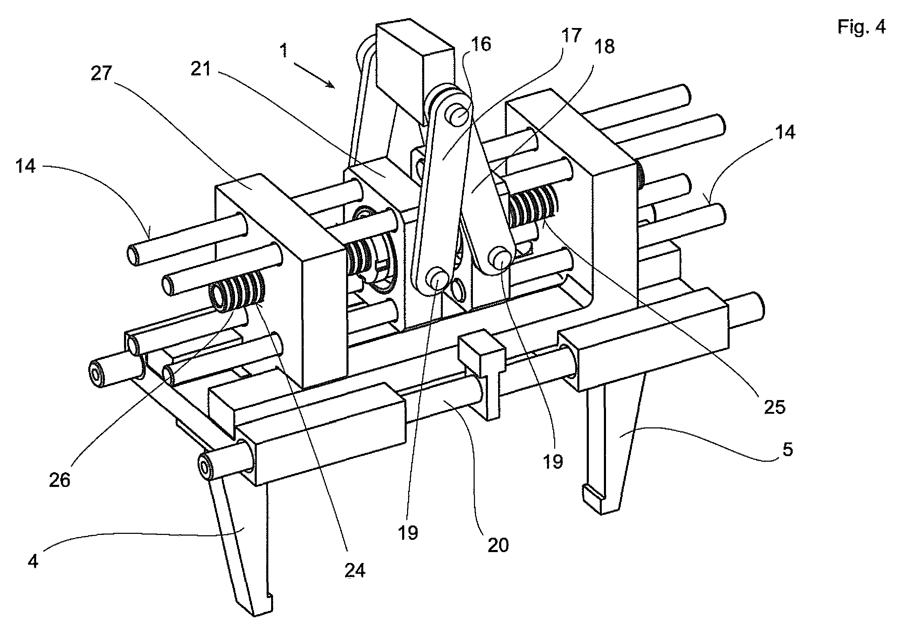

In den Figuren 3a, 3b und 4 ist eine Vorrichtung 1' zum Anheben und Greifen von Gegenständen 2 abgebildet, die zusätzlich zu den in den Figuren 1a bis 2b beschriebenen Bauteilen zwei Gewindespindeln 24 und 25 aufweist. Die Außenkontur der Gewindespindel 24 ist als rechtsgängiges und die Außenkontur der Gewindespindel 25 als linksgängiges Gewinde ausgestaltet; somit sind die Rotationsrichtungen der Gewinde der beiden Gewindespindeln 24 und 25 zueinander gegenläufig. Die Gewindespindeln 24, 25 sind zudem zwischen den Stangen 20 des Führungsgestänges 14 gehalten und voneinander beabstandet.

Die Gewindespindeln 24, 25 sind als Hohlkörper ausgestaltet, die fluchtend zueinander angeordnet sind, so dass in das Innere der jeweiligen Gewindespindel 24, 25 eine Antriebswelle 31 einsetzbar ist. Die Antriebswelle 31 wird beispielsweise mittels eines Keilriemenantriebes durch einen Motor 30 in Rotation versetzt. Die Krafteinleitung erfolgt im Wesentlichen fluchtend zu der Linearbewegung der Kolbenstange 8, so dass für die Einleitung der Kräfte der vorhandene Bauraum genutzt ist.

Die beiden Führungsschlitten 21 umschließen die Gewindespindel 24 bzw. 25 und sind mit dieser über ein Kugellager 29 zur Aufnahme hoher Axialkräfte verbunden, so dass zwischen dem drehfest angeordneten Führungsschlitten 21 und der rotierenden Gewindespindel 24 bzw. 25 eine Relativbewegung stattfinden kann. Gleichwohl dienen die Kugellager 29 auch als Kraftübertragungselemente, denn die von dem Kniehebel 15 aufgewendete Spreizkraft wird über die Kugellager 29 von dem Führungsschlitten 21 auf die jeweilige Gewindespindel 24 oder 25 übertragen. Anstelle des Kugellagers 29 können auch Gleitlager zur Abstützung der Axialkräfte eingesetzt sein.

Darüber hinaus ist die Gewindespindel 24 bzw. 25 mit der Antriebswelle 31 drehfest und axial verschiebbar verbunden. Beim Aufspreizen, also beim axialen Verschieben des Führungsschlittens 21, kann demnach die Gewindespindel 24 bzw. 25 axial entlang der Antriebswelle 31 verschoben sein; die von der Antriebswelle 31 übertragenen Rotationskräfte werden beispielsweise mittels eines Vierkantprofils oder mittels einer Keil-Nutenverbindung übertragen. Die Antriebswelle 31 ist somit kraft- oder formschlüssig mit der jeweiligen Gewindespindel 24 bzw. 25 verbunden.

Wird die Antriebswelle 31 in Rotation versetzt, so werden die beiden Greifarme 4 und 5 in Abhängigkeit von der Drehrichtung nach außen oder nach innen bewegt, so dass der Abstand zwischen den beiden Greifarmen 4 und 5 variabel durch die Antriebswelle 31 und die Gewindespindeln 24 und 25 einstellbar ist. Die Position des Führungsschlittens 21 ändert sich dabei nicht.

Ist der Abstand der beiden Greifarme 4 und 5 an die geometrischen Verhältnisse des aufzunehmenden Gegenstandes 2 angepasst, ist der Kniehebel 15 mittels der Antriebseinrichtung 6 aufzuspreizen, so dass durch die Führungsschlitten 21 eine von den Greifarmen 4 und 5 übertragene Spannkraft erzeugt ist. Während des Einspannvorganges bewegt sich demnach der Führungsschlitten 21 und die Gewindespindel 24 bzw. 25 axial nach außen.

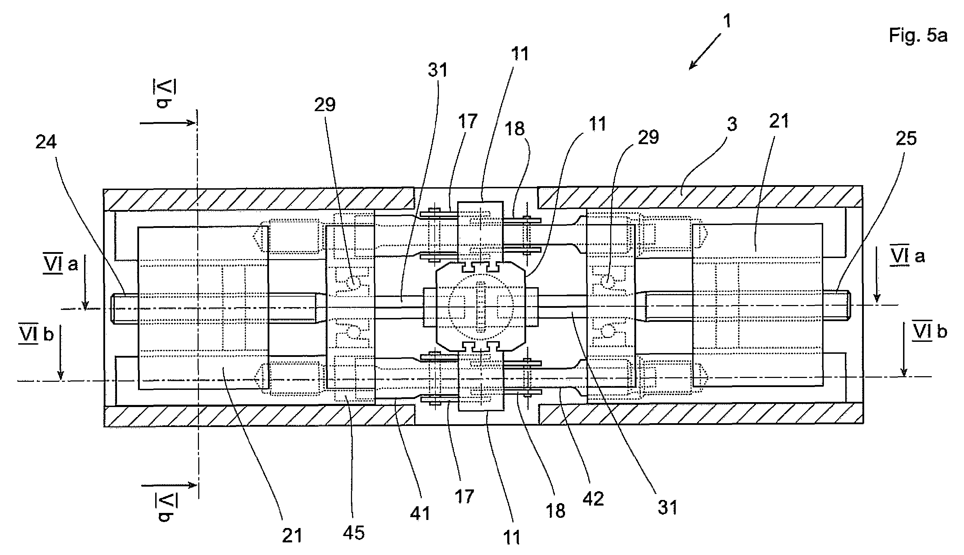

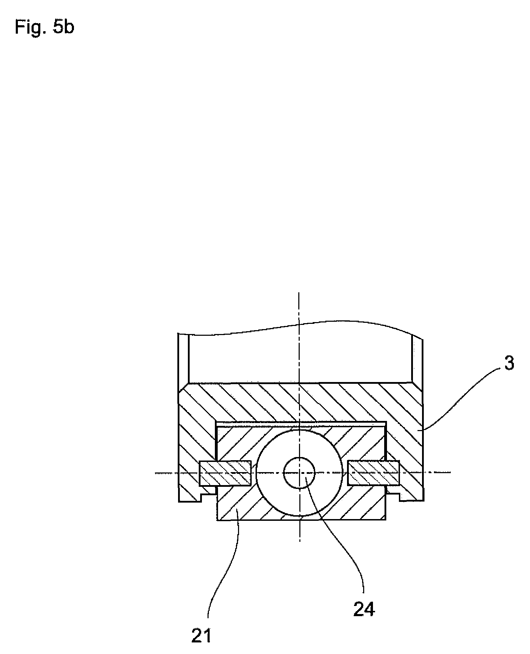

In den Figuren 5a bis 6c ist die Vorrichtung 1 zum Greifen und Anheben von Gegenständen 2 in einer andersartigen Ausgestaltung dargestellt. Die beiden Kniehebelarme 37 und 38 des Kniehebels 15 sind nämlich gelenkig an jeweils einem Rohrstück 41 bzw. 42 angekoppelt und der jeweils andere Kniehebelarm 38 bzw. 37 ist an dem anderen Rohrstück 42 bzw. 41 in einem Langloch 43 linear geführt gehalten. Die beiden Rohrstücke 41 und 42, die relativ zueinander bewegbar sind und folglich als Gleitelemente wirken, sind teleskopartig ineinander gelagert, so dass diese linear und relativ zueinander beweglich sind. Die Rohrstücke 41, 42 können auch plattenförmig ausgestaltet sein. Die Rohrstücke 41, 42 sind paarweise und parallel zueinander verlaufend angeordnet und sind mittels eines Gelenkbolzens 45 miteinander verbunden, der in der Längsachse 43 eingesetzt ist.

Der Antrieb der Gewindespindel 24 und 25 kann auch mittels einer Kurbel manuell erfolgen.

Die Ausgestaltung der beiden Gewindespindeln 24 und 25 ist nicht notwendigerweise hohl, sondern wie in Figur 5a dargestellt mit einem entsprechenden durchgehenden Innensechskant. Diese Buchse ist über die beiden Gewindespindeln 24 und 25 gesteckt und im Gehäuse drehbar gelagert. Mit der Buchse ist dann formschlüssig ein Schneckenrad oder eine Keilriemenscheibe verbunden. Wird die Buchse in Rotation versetzt, drehen sich auch die Gewindespindeln 24 und 25.

Wenn die beiden Kniehebelarme 37 und 38 auseinandergedrückt sind, beispielsweise dadurch, dass der Kniehebel 15 durch den Antriebskolben 7 nach unten gedrückt ist, dann zieht der jeweilige Kniehebelarm 37 und 38 das mit diesem verbundene Rohrstück 41 bzw. 42 von dem Kniehebel 15 weg. Da jedoch die Anlenkung der Kniehebelarme 37 und 38 derart versetzt an dem jeweiligen Rohrstück 41 und 42 vorgesehen ist, werden die an dem Rohrstück 41 und 42 angebrachten Greifarme 4 und 5 aufeinander zu bewegt.

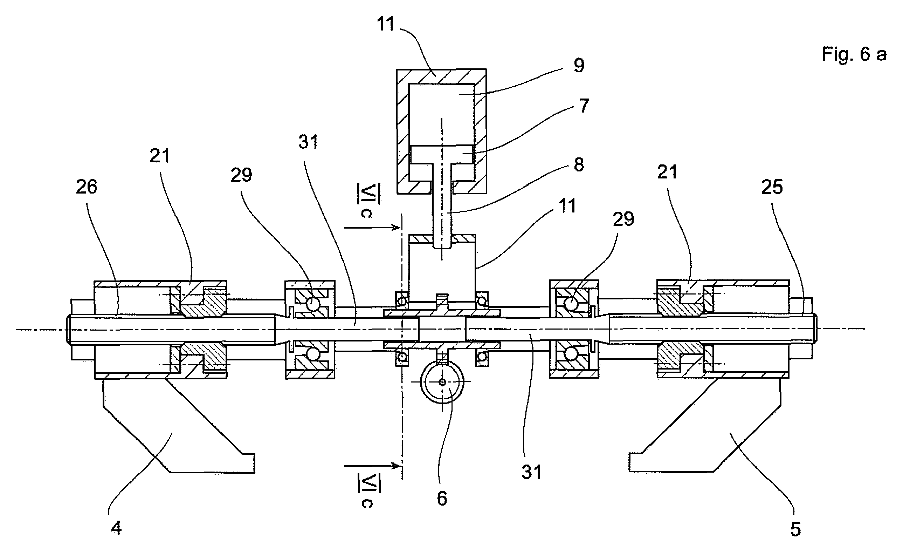

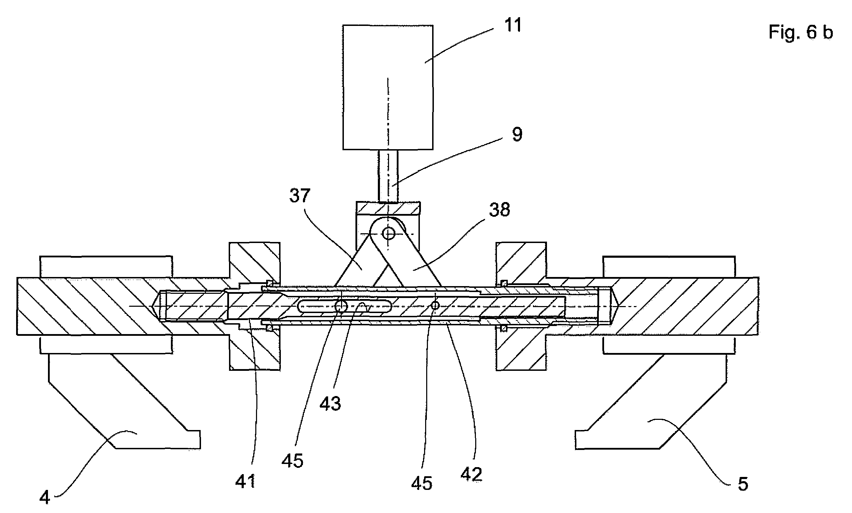

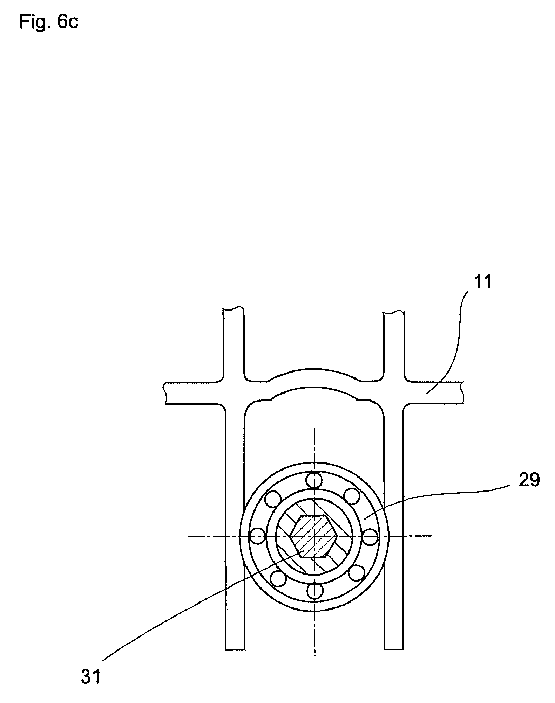

Die Greifarme 4 und 5 können ebenfalls mit der Spindel 24 und 25 in ihrem Abstand zueinander verändert werden, denn die Greifarme 4 und 5 sind zwar formschlüssig mit dem jeweiligen Rohrstück 41 und 42 verbunden, können aber relativ zu diesem bewegt werden, wie dies insbesondere aus Figur 6a ersichtlich ist. Dort ist die Gewindespindel 24 und 25 dargestellt, die mittels des Antriebsmotors 30 gegenläufig versetzt zueinander in Rotation gebracht ist, wie dies bereits in den Figuren 1 bis 4 erläutert wurde, so dass die Führungsschlitten 21 nach außen oder innen verfahrbar sind. Das jeweilige Rohrstück 41 und 42 ist in einem der Führungsschlitten 21 mittels einer Gewindebohrung 44 trieblich gehalten, so dass beim Bewegen des jeweiligen Rohrstückes 41 und 42 die Kraft des Kniehebels 15 auf das Rohrstück 41 und 42 und damit auf die Führungsschlitten 21 und die Greifarme 4 und 5 übertragen ist.

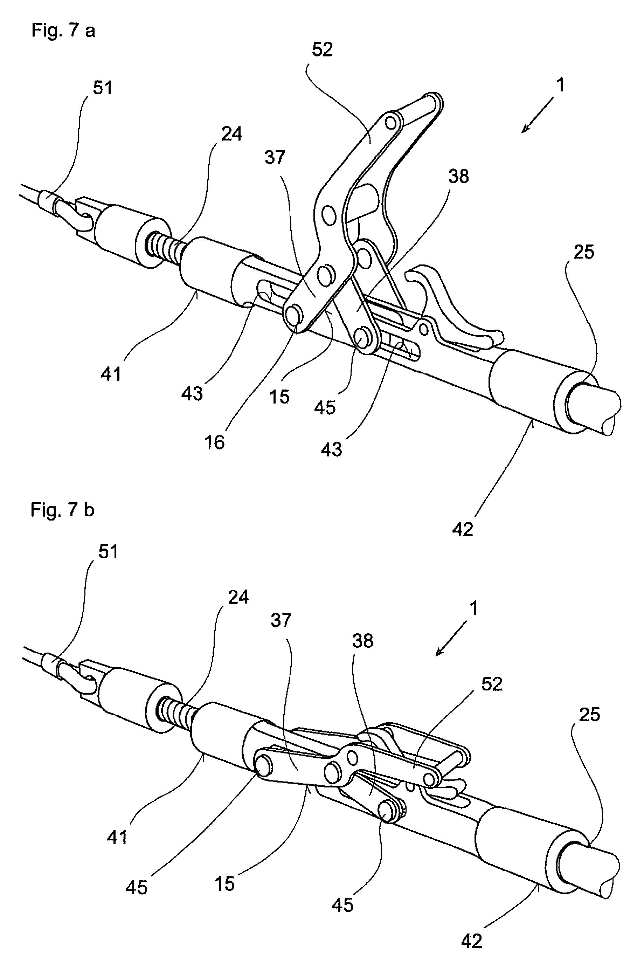

In In den Figuren 7a und 7b ist eine vierte Ausführung der Vorrichtung 1 zu entnehmen, die nunmehr zum Spannen eines Drahtes 51, beispielsweise als Wantenspanner an einem Boot, einsetzbar ist. Dabei ist der Kniehebel 15 an den zwei teleskopartig ineinander gelagerte rohrförmig ausgestalteten Gleitelementen 41 und 42 angelenkt. Der Kniehebel 15 ist mit einem Griffstück 52 gelenkig gekoppelt, das auf die Gleitelemente 41 und 42 zu bewegt wird, wodurch die beiden Kniehebelarme 37 und 38 aufgespreizt sind, so dass sich die beiden Gleitelemente 41 und 42 aufeinander zu bewegen, so dass der an dem jeweiligen Gleitelement 41 oder 42 angebrachte Draht 51 gespannt ist, da sich der Abstand zwischen den Gleitelementen 41 und 42 verringert. Das jeweilige Gleitelement 41 bzw. 42 ist auf einer Gewindespindel 24 oder 25 aufgeschraubt und kann folglich voreingestellt werden, so dass mit Hilfe des Kniehebels 15 exakt der Weg überwunden ist, der benötigt wird, um den Draht 51 optimal zu spannen.

## Patentansprüche

1. Vorrichtung (1), insbesondere zum Greifen und Anheben von Gegenständen (2), bestehend aus mindestens zwei an einem Traggestell (3) abgestützten Greifarmen (4, 5), zwischen denen der aufzunehmende Gegenstand (2) einspannbar ist, und aus einer mit dem jeweiligen Greifarm (4, 5) über Zwischenglieder (13) trieblich verbundenen Antriebseinrichtung (6),
**dadurch gekennzeichnet,**
**dass** das jeweilige Zwischenglied (13) als L-förmiger Führungsschlitten (21) oder als teleskopartig ineinander verschiebbar gelagerte Gleitelemente (41 und 42) ausgestaltet ist, dass das erste freie Ende (22) des jeweiligen Führungsschlittens (21) oder des jeweiligen Gleitelementes (41 ,42 ) mittels eines
Kniehebels (15) trieblich mit der Antriebseinrichtung (6) verbunden ist, dass das zweite freie Ende (23) des jeweiligen Führungsschlittens (21) oder des Gleitelementes (42) mit dem jeweiligen Greifarm (4 oder 5) mittels Ansgriffspunkt (19) gegenüberliegend zu dem Angriffspunkt (16) des Kniehebels (15) an dem Führungsschlitten (21) oder Gleitelement (41, 42) oder über Zwischenglieder (24, 25 und 27) in formschlüssiger Wirkverbindung steht, dass der Führungsschlitten (21) oder das Gleitelement (41, 42) und der jeweilige Greifarm (4, 5) an einem Führungsgestänge (14) linear verschiebbar gehalten sind
oderdass
die jeweiligen Führungsschlitten (21) oder Gleitelemente (41, 42) die als
teleskopartig ineinander verschiebbar gelagert sind und der jeweilige Greifarm (4, 5) linear bewegbar ist, dass eine Verschiebung des Angriffspunktes (16) durch die Antriebseinrichtung (6) eine Spreizung der Stangen (17, 18) des Kniehebels (15) und eine Verschiebung der Führungsschlitten (21) oder der Gleitelemente (41, 42) bewirkt, dass die Führungsschlitten (21) oder der Gleitelemente (41, 42) parallel und symmetrisch in einer Ebene angeordnet sind und das der Verschiebung der Führungsschlitten (21) oder der Gleitelemente (41, 42) eine Bewegung der Greifarme (4, 5) aufeinander zu erfolgt.

2. Vorrichtung (1), insbesondere zum Spannen von Drähten (51) und Seilen, bestehend aus mindestens zwei rohrförmigen Gleitelementen (41, 42) an denen der Draht (51) angebracht ist und aus einer mit den jeweiligen rohrförmigen Gleitelementen (41, 42) über Zwischenglieder (13) verbundenen Antriebsmittel (6),
**dadurch gekennzeichnet,**
**dass** das jeweilige Zwischenglied (13) als teleskopartig ineinander verschiebbar gelagerten Gleitelementen (41 und 42) ausgestaltet ist, dass das erste Ende des jeweiligen Gleitelementes (41, 42) mittels eines Kniehebels (15) trieblich mit dem Antriebsmittel (6) in Form eines Griffstückes (52) verbunden ist, dass das zweite freie Ende des jeweiligen Gleitelementes (41 oder 42), das gegenüberliegend zu dem Angriffspunkt (16) des Kniehebels (15) an dem Gleitelement (41 oder 42) angeordnet ist, unmittelbar oder über Zwischenglieder (24, 25 und 27) in formschlüssiger Wirkverbindung steht und dass das jeweilige Gleitelement (41, 42) an einem. Langloch (43) linear geführt gehalten ist.

3. Vorrichtung nach Anspruch 1,
**dadurch gekennzeichnet,**
**dass** das Führungsgestänge (14) an dem Traggestell (13) gehalten ist und aus einer Stange (20) oder mehreren parallel zueinander verlaufenden Stangen (20) gebildet ist, die in ihrem Querschnitt rund oder mehreckig ausgestaltet und die horizontal ausgerichtet sind.

4. Vorrichtung nach Anspruch 1 oder 2,
**dadurch gekennzeichnet,**
**dass** durch die Antriebseinrichtung (6) ein Pneumatik- oder Hydraulikkolben (7) angetrieben ist, durch die zusammen mit dem Kniehebel (15) eine voreinstellbare Kraftübersetzung der eingeleiteten Kraft der Antriebseinrichtung (6) auf den jeweiligen Führungsschlitten (21) erreicht ist.

5. Vorrichtung nach Anspruch 1 oder 2,
**dadurch gekennzeichnet,**
**dass** zur Weiteneinstellung der Greifarme (4, 5) dem jeweiligen Führungsschlitten (21) eine Gewindespindel (24, 25) zugeordnet ist, die zueinander gegenläufige Gewinderichtungen aufweisen, dass der Führungsschlitten (21) mit der Gewindespindel (24, 25) formschlüssig verbunden ist und dass an dem Außengewinde (26) der Gewindespindel ein Backen (27) aufgeschraubt ist, der mit dem jeweiligen Greifarm (4, 5) verbunden ist und der drehfest und axial verschiebbar an dem Führungsgestänge (14) gehalten ist.

6. Vorrichtung nach Anspruch 5
**dadurch gekennzeichnet,**
**dass** der Backen (27) und die Gewindespindeln (24, 25) über ein miteinander korrespondierendes Innen- und Außengewinde (28, 26) trieblich miteinander verbunden sind.

7. Vorrichtung nach Anspruch 5,
**dadurch gekennzeichnet,**
**dass** zwischen der jeweiligen Gewindespindel (24, 25) und dem Führungsschlitten (21) ein Kugellager (29), oder ein Gleitlager zur Abstützung hoher Axialkräfte vorgesehen ist, durch das die von dem Kniehebel (15) erzeugten Spannkräfte auf die Gewindespindel (24, 25) übertragen sind.

8. Vorrichtung nach Anspruch 5,
**dadurch gekennzeichnet,**
**dass** die Gewindespindel (24, 25) als Hohlkörper ausgebildet ist und dass in jeder der Gewindespindeln (24, 25) eine Antriebswelle (31) eingesetzt ist, die formschlüssig mit der Gewindespindel (24, 25) verbunden ist.

9. Vorrichtung nach Anspruch 5,
**dadurch gekennzeichnet,**
**dass** die Innenkontur der Gewindespindel (24, 25) mehreckig ausgestaltet ist und dass die Außenkontur der Antriebswelle (31) an die Innenkontur der Gewindespindel (24, 25) zur Übertragung von Rotationskräften angepasst ist.

10. Vorrichtung nach Anspruch 8,
**dadurch gekennzeichnet,**
**dass** die Innenkontur der Gewindespindel (24, 25) rund ausgestaltet ist, dass die Außenkontur der Antriebswelle (31) an die Innenkontur der Gewindespindel (24, 25) angepasst ist und dass zur Übertragung von Rotationskräften zwischen der jeweiligen Gewindespindel (24 bzw. 25) und der Antriebswelle (31) eine Nut (32) eingearbeitet ist, in die ein Keil (33) eingesetzt ist.

11. Vorrichtung nach Anspruch 8,
**dadurch gekennzeichnet,**
**dass** die Gewindespindel (24, 25) und der Führungsschlitten (21) entlang der Antriebswelle (31) axial verschiebbar sind.

12. Vorrichtung nach Anspruch 9 oder 10,
**dadurch gekennzeichnet,**
**dass** die Antriebswelle (31) von einem Motor (30) in Rotation versetzt ist und dass die Krafteinleitung des Motors (30) zwischen den beiden Führungsschlitten (21) und den Gewindespindeln (24, 25) angeordnet ist.

13. Vorrichtung nach Anspruch 8,
**dadurch gekennzeichnet,**
**dass** die Angriffspunkte (16, 19) der Antriebseinrichtung (6) und der Greifarme (4, 5) an dem Führungsschlitten (21) variabel verschiebbar sind.

14. Vorrichtung nach einem der vorgenannten Ansprüche,
**dadurch gekennzeichnet,**
**dass** in dem Traggestell (3) eine Gewindebohrung (36) eingearbeitet ist, dass in die Gewindebohrung (36) ein einen Anschlag (34) bildender Gewindestift (35) eindrehbar ist und dass mittels der Position des Gewindestiftes (35) der Hubweg (HW) des Angriffspunktes (16) des Kniehebels (15) begrenzbar ist.

15. Vorrichtung nach einem der vorgenannten Ansprüche,
**dadurch gekennzeichnet,**
**dass** die Greifarme (4, 5) kraft- oder formschlüssig mit dem aufzunehmenden Gegenstand (2) im eingespanntem Zustand verbunden sind.

16. Vorrichtung nach Anspruch 2,
**dadurch gekennzeichnet,**
**dass** das Gleitelement aus zwei teleskopartig ineinander gelagerte rohrförmigen Gleitelementen (41 und 42) ausgestaltet ist, die relativ und fluchtend zueinander beweglich angeordnet sind und dass das jeweilige rohrförmige Gleitelemente (41, 42) kraft- oder formschlüssig mit je einem Kniehebel (15) verbunden ist.

17. Vorrichtung nach Anspruch 2,
**dadurch gekennzeichnet,**
**dass** jeweils einer der beiden Kniehebelarme (37 oder 38) des Kniehebels (15) an einem der teleskopartig ineinander gelagerten rohrförmigen Gleitelementen (41, 42) drehbar angebracht ist und dass der andere der beiden Kniehebelarme (38 oder 37) des Kniehebels (15) in dem anderen rohrförmigen Gleitelement (42 bzw. 41) in einem Langloch (43) geführt gehalten ist.

18. Vorrichtung nach Anspruch 2 oder 16,
**dadurch gekennzeichnet,**
**dass** an dem Kniehebel (15) ein Handgriff (53) angelenkt ist, durch den der Kniehebel (15) aufgespreizt und/oder bei Betätigung zusammengezogen ist und dass die Vorrichtung als Spannschloss, insbesondere zum Spannen von Draht (51) oder Seilen einsetzbar ist.

## Claims

1. A device (1), especially for gripping and lifting objects (2) comprising at least two gripper arms (4, 5) supported on a carrier frame (3), between which the object (2) to be picked up can be clamped, and also comprising a driving device (6) in a driving connection with the corresponding gripper arm (4, 5) by means of intermediate elements (13),
**characterised in that,**
the corresponding intermediate element (13) is configured as an L-shaped guide slide (21) or as sliding elements (41 and 42) mounted one inside the other in a telescopic arrangement, that the first free end (22) of the corresponding guide slide (21) or the corresponding sliding element (41, 42) is in a driving connection with the driving device (6) by means of a toggle lever (15), that the second free end (23) of the corresponding guide slide (21) or the sliding element (42) is in a positive, active connection either directly or via intermediate elements (24, 25 and 27) with the corresponding gripper arm (4 or 5) by means of a point of action (19) opposite to the point of action (16) of the toggle lever (15) on the guide slide (21) or sliding element (41, 42), that the guide slide (21) or the sliding element (41, 42) and the corresponding gripper arm (4, 5) are held on a guide linkage (14) in an arrangement that is moveable in a linear direction,
or that
the corresponding guide slides (21) or sliding elements (41, 42) are mounted one inside the other in a telescopic arrangement and the corresponding gripper arm (4, 5) can be moved in a linear direction, that moving the point of action (16) causes a spreading of the rods (17, 18) of the toggle lever (15) as a result of the driving device (6) and moves the guide slide (21) or the sliding elements (41, 42), that the guide slide (21) or the sliding elements (41, 42) are arranged in parallel and symmetrically in one plane and that the movement of the guide slide (21) or the sliding elements (41, 42) causes the gripper arms (4, 5) to move towards one another,

2. A device (1), especially for clamping wires (51) and ropes, comprising at least two tube-shaped sliding elements (41, 42) to which the wire (51) is attached and comprising a driving device (6) which is connected to the corresponding tube-shaped sliding elements (41, 42) by means of intermediate elements (13),
**characterised in that,**
the corresponding intermediate element (13) is configured as sliding elements (41 and 42) mounted one inside the other in a telescopic arrangement, that the first end of the corresponding sliding element (41, 42) is in a driving connection with the driving device (6) in the form of a handle (52) by means of a toggle lever (15), that the second free end of the corresponding sliding element (41 or 42) arranged opposite the point of action (16) of the toggle lever (15) on the sliding element (41 or 42) is in a positive, active connection either directly or via intermediate elements (24, 25 and 27) and that the corresponding sliding element (41, 42) is held guided within a slot (43).

3. The device in accordance with Claim 1,
**characterised in that,**
the guide linkage (14) is held on the support frame (13) and comprises a rod (20) or several rods (20) running parallel to one another, which have a round or polygonal cross section and are horizontally aligned.

4. The device in accordance with Claim 1 or 2,
**characterised in that,**
the driving device (6) drives a pneumatic or hydraulic piston (7), by means of which, together with the toggle lever (15), a pre-adjustable force transmission of the force applied by the driving device (6) on the corresponding guide slide (21) is achieved.

5. The device in accordance with Claim 1 or 2,
**characterised in that,**
for width adjustment of the gripper arms (4, 5), the corresponding guide slide (21) has a threaded spindle (24, 25) allocated to it, which features threads running in opposite directions to one another, that the guide slide (21) is in a positive connection with the threaded spindle (24, 25) and that a jaw (27) is screwed onto the external thread (26) of the threaded spindle in which case the jaw (27) is connected to the corresponding gripper arm (4, 5) and is held in a rotationally fixed and axially movable arrangement on the guide linkage (14).

6. The device in accordance with Claim 5,
**characterised in that,**
the jaw (27) and the threaded spindles (24, 25) are connected to one another in a drivable arrangement by means of corresponding internal and external threads (28, 26).

7. The device in accordance with Claim 5,
**characterised in that,**
a ball bearing (29) or a plain bearing for supporting considerable axial forces is provided between the corresponding threaded spindle (24, 25) and the guide slide (21), by means of which the clamping forces generated by the toggle lever (15) are transferred to the threaded spindle (24, 25).

8. The device in accordance with Claim 5,
**characterised in that,**
the threaded spindle (24, 25) is configured as a hollow body and that each of the threaded spindles (24, 25) has a drive shaft (31) inserted in it, which is in a positive connection with the threaded spindle (24, 25).

9. The device in accordance with Claim 5,
**characterised in that,**
the inside contour of the threaded spindle (24, 25) has a polygonal configuration and that the outer contour of the drive shaft (31) is adapted to the inner contour of the threaded spindle (24, 25) in order for rotational forces to be transmitted.

10. The device in accordance with Claim 8,
**characterised in that,**
the inside contour of the threaded spindle (24, 25) has a round configuration, that the outer contour of the drive shaft (31) is adapted to the inner contour of the threaded spindle (24, 25) and that, in order to transfer rotational forces between the corresponding threaded spindle (24 or 25) and the drive shaft (31), a groove (32) is incorporated into which a wedge (33) is inserted.

11. The device in accordance with Claim 8,
**characterised in that,**
the threaded spindle (24, 25) and the guide slide (21) can be axially adjusted along the drive shaft (31).

12. The device in accordance with Claim 9 or 10,
**characterised in that,**
the drive shaft (31) is set in rotation by a motor (30) and that the force application of the motor (30) is arranged between the two guide slides (21) and the threaded spindles (24, 25).

13. The device in accordance with Claim 8,
**characterised in that,**
the points of action (16, 19) of the driving device (6) and the gripper arms (4, 5) can be adjusted variably on the guide slide (21).

14. The device in accordance with one of the aforementioned claims,
**characterised in that,**
a threaded hole (36) is worked into the support frame (3), that a threaded pin (35) can be screwed into the threaded hole (36) and forms a stop (34) and that the stroke distance (HW) of the point of action (16) of the toggle lever (15) can be limited by means of the position of the threaded pin (35).

15. The device in accordance with one of the aforementioned claims,
**characterised in that,**
the gripper arms (4, 5) are non-positively or positively connected to the object (2) to be picked up in the clamped condition.

16. The device in accordance with Claim 2,
**characterised in that,**
the sliding element is composed of two tube-shaped sliding elements (41 and 42) that are mounted one inside the other in a telescopic arrangement, which are arranged so as to be able to move relative to and flush with one another, and that the corresponding tube-shaped sliding element (41, 42) is connected to one toggle lever (15) each in a non-positive or positive connection.

17. The device in accordance with Claim 2,
**characterised in that,**
one each of the two toggle lever arms (37 or 38) of the toggle lever (15) is attached in a rotating arrangement to one of the tube-shaped sliding elements (41, 42) which are mounted one inside the other in a telescopic arrangement, and that the other of the two toggle lever arms (38 or 37) of the toggle lever (15) is held guided in a slot (43) in the other tube-shaped sliding element (42 or 41).

18. The device in accordance with Claim 2 or 16,
**characterised in that,**
a handle (53) is articulated on the toggle lever (15), by means of which the toggle lever (15) can be spread apart and/or is drawn together when actuated, and that the device can be used as a turnbuckle, in particular for clamping wire (51) or ropes.

## Revendications

1. Dispositif (1) en particulier pour la saisie et le levage d'objets (2), comprenant au moins deux bras de saisie (4, 5) s'appuyant sur un support (3) et entre lesquels il se laisse serrer l'objet à saisir (2), et un équipement d'entraînement (6) lié de manière entraînante, par l'intermédiaire d'éléments intermédiaires (13), avec le bras de saisie respectif (4, 5),
**caractérisé en ce que**
l'élément intermédiaire respectif (13) est conçu sous la forme d'un chariot de guidage (21) en L, ou sous la forme d'éléments lisses (41 et 42) glissant l'un dans l'autre à la manière d'un télescope, que la première extrémité libre (22) du chariot de guidage respectif (21) ou de l'élément lisse respectif (41, 42) est lié par entraînement, moyennant un levier coudé (15), avec l'équipement d'entraînement (6), qu'avec le bras da saisie respectif (4 ou 5) et moyennant le point d'attaque (19) vis-à-vis du point d'attaque (16) du levier coudé (15), la deuxième extrémité libre (23) du chariot de guidage respectif (21) ou de l'élément lisse (42) est liée par engagement positif, soit directement soit par des éléments intermédiaires (24, 25 et 27) avec le chariot de guidage (21) ou l'élément lisse (21), que le chariot de guidage (21) ou l'élément lisse (41, 42) et le bras da saisie respectif (4, 5) se laissent déplacer en direction linéaire sur une tringlerie de guidage (14) ou que les chariots de guidage respectifs (21) ou les éléments lisses (41, 42) logés de sorte à se déplacer les uns dans les autres à la manière d'un télescope, et le bras de saisie respectif (4, 5), se laissent déplacer en direction linéaire, que le déplacement du point d'attaque (16) par l'équipement d'entraînement (6) provoque un écartement des tiges (17, 18) du levier coudé (15) et un déplacement des chariots de guidage (21) ou des éléments lisses (41, 42), que les chariots de guidage (21) ou les éléments lisses (41, 42) sont disposés parallèlement et symétriquement dans un plan et que le déplacement des chariots de guidage (21) ou des éléments lisses (41, 42) provoquent un rapprochement des bras de saisie (4, 5).

2. Dispositif (1) en particulier pour le serrage de fils (51) et de cordes, comprenant au moins deux éléments tubulaires lisses (41, 42) auxquels est fixé le fil (51) et un moyen d'entraînement (6) lié par des éléments intermédiaires (13) avec les éléments tubulaires lisses respectifs (41, 42)
**caractérisé en ce que**
l'élément intermédiaire respectif (13) et composé d'éléments lisses (41 et 42) logés de manière à se déplacer les uns dans les autres à la manière d'un télescope, que moyennant un levier coudé (15), la première extrémité de l'élément lisse respectif (41, 42) est liée par entraînement avec le moyen d'entraînement (6) sous la forme d'une poignée (52), que la deuxième extrémité libre de l'élément lisse respectif (41 ou 42) qui est montée face au point d'attaque (16) du levier coudé (15) sur l'élément lisse (41 ou 42) est liée par la force et la forme soit directement soit par des éléments intermédiaires (24, 25 et 27), et que l'élément lisse respectif (41, 42) est guidé en direction linéaire dans un trou oblong (43).

3. Dispositif d'après la revendication 1,
**caractérisé en ce que**
la tringlerie de guidage (14) est retenue sur le support (3) et qu'elle es composée d'une tige (20) ou de plusieurs tiges parallèles (20) à sections transversales rondes ou polygonales et orientées en direction horizontale.

4. Dispositif d'après les revendications 1 ou 2,
**caractérisé en ce que**
l'équipement d'entraînement (6) actionne un piston pneumatique ou hydraulique (7) permettant, en collaboration avec le levier coudé (15), de réaliser une transmission de force réglable de la force dirigée de l'équipement d'entraînement (6) vers le chariot de guidage respectif (21).

5. Dispositif d'après les revendications 1 ou 2,
**caractérisé en ce que**
par le réglage de l'écartement des bras de saisie (4, 5), il est attribué au chariot de guidage respectif (21) une broche filetée (24, 25) avec des sens de spires opposés l'une à l'autre, que le chariot de guidage (21) est connecté par la force et la forme avec la broche filetée (24, 25) et que, sur le filetage (26) de la broche filetée, il est vissé un mors (27) lié avec le bras de saisie respectif (4, 5) et retenu de manière résistant à la torsion et axialement déplaçable sur la tringlerie de guidage (14).

6. Dispositif d'après la revendication 5,
**caractérisé en ce que**,
moyennant un taraudage et un filetage collaborant ensemble (28, 26), le mors (27) et les broches filetées (24, 25) sont liés par entraînement entr'eux.

7. Dispositif d'après la revendication 5,
**caractérisé en ce que**,
entre la broche filetée respective (24, 25) et le chariot de guidage (21), il est prévu un roulement (29) ou un palier lisse servant à absorber de hautes forces axiales et qui permet de transmettre les forces de serrage produites par le levier coudé (15) sur la broche filetée (24, 25).

8. Dispositif d'après la revendication 5,
**caractérisé en ce que**
la broche filetée (24, 25) est conçue sous la forme d'un corps creux et que, dans chacune des broches filetées (24, 25), il est monté un arbre d'entraînement (31) lié par la force et la forme avec la broche filetée (24, 25).

9. Dispositif d'après la revendication 5,
**caractérisé en ce que**
le contour intérieur de la broche filetée (24, 25) est polygonal et que le contour extérieur de l'arbre d'entraînement (31) est adapté au contour intérieur de la broche filetée (24, 25) afin de transmettre les forces de rotation.

10. Dispositif d'après la revendication 8,
**caractérisé en ce que**
le contour intérieur de la broche filetée (24, 25) est rond, que le contour extérieur de l'arbre d'entraînement (31) est adapté au contour intérieur de la broche filetée (24, 25) et que pour la transmission des forces de rotation, il est prévu entre la broche filetée respective (24 ou 25) et l'arbre d'entraînement (31) une gorge (32) dans laquelle il est inséré un coin (33).

11. Dispositif d'après la revendication 8,
**caractérisé en ce que**
la broche filetée (24, 25) et le chariot de guidage (21) se laissent déplacer axialement le long de l'arbre d'entraînement (31).

12. Dispositif d'après les revendications 9 ou 10,
**caractérisé en ce que**
l'arbre d'entraînement (31) est mis en rotation par un moteur (30) et que l'introduction de force par le moteur (30) est prévue entre les deux chariots de guidage (21) et les broches filetées (24, 25).

13. Dispositif d'après la revendication 8,
**caractérisé en ce que**
les points d'attaque (16, 19) de l'équipement d'entraînement (6) et des bras de saisie (4, 5) se laissent déplacer de manière variable sur le chariot de guidage (21).

14. Dispositif d'après une des revendications précédentes,
**caractérisé en ce que**
dans le support (3), il est pratiqué un taraudage (36), que dans le taraudage (36), il peut être vissé un goujon fileté (35) formant une butée (34) et que, par la position du goujon fileté (35), il peut être limité la course du point d'attaque (16) du levier coudé (15).

15. Dispositif d'après une des revendications précédentes,
**caractérisé en ce que**,
en état serré, les bras de saisie (4, 5) sont liés par la force et la forme avec l'objet à saisir (2).

16. Dispositif d'après la revendication 2,
**caractérisé en ce que**
l'élément lisse se compose de deux éléments lisses tubulaires (41 et 42) logés l'un dans l'autre à la manière d'un télescope, qui sont disposés de manière mobile et en alignement précis l'un par rapport à l'autre, et que l'élément tubulaire lisse respectif (41 ou 42) est lié par la force et la forme avec respectivement un levier coudé (15).

17. Dispositif d'après la revendication 2,
**caractérisé en ce que**
respectivement un des deux bras de levier coudé (37 ou 38) du levier coudé (15) est monté de manière rotative sur un des éléments tubulaires lisses (41 et 42) logés l'un dans l'autre à la manière d'un télescope, et que l'autre des deux bras de levier coudé (38 ou 37) du levier coudé (15) est guidé dans un trou oblong (43) dans l'autre élément tubulaire lisse (42 ou 41).

18. Dispositif d'après la revendication 2 ou 16,
**caractérisé en ce que**
sur le levier coudé (15), il est articulé une poignée (53) qui a pour effet que le levier coudé (15) est écarté et/ou rétréci à l'actionnement et que le dispositif se laisse utiliser en tant que tendeur pour le serrage de fils (51) ou de cordes.
